# EUROPEAN PATENT SPECIFICATION

(11) **EP 3 465 137 B1**
(45) Date of publication and mention of the grant of the patent: **28.07.2021**
(21) Application number: 16903008.7
(22) Date of filing: 15.09.2016
(51) Int. Cl.: G01N 3/32, G01N 3/56, G01N 3/04

(54) **JIG FOR MOUNTING SAMPLES IN A TEST DEVICE FOR MATERIAL CONTACT FATIGUE TESTS**
EINSPANNVORRICHTUNG ZUR AUFNAHME VON PROBEN IN EINER TESTVORRICHTUNG FÜR MATERIALKONTAKTERMÜDUNGSTESTS
GABARIT POUR MONTAGE D'ÉCHANTILLONS DANS UN DISPOSITIF D'ESSAI POUR ESSAIS DE FATIGUE PAR CONTACT DE MATÉRIAU

(30) Priority: 26.05.2016 CZ 20160312
(43) Date of publication of application: 10.04.2019
(73) Proprietor: Univerzita Pardubice, 532 10 Pardubice (CZ)
(72) Inventor: SCHMIDOVÁ, Eva, 533 52 Staré Hradiste (CZ); CULEK, Bohumil, 533 52 Staré Hradiste (CZ); TLUSTOS, Jiri, 533 41 Lázne Bohdanec (CZ)
(74) Representative: Soukup, Petr
(86) International application number: PCT/CZ2016/000105
(87) International publication number: WO 2017/202396

(56) References cited:
- CN-A- 1 936 536
- CZ-A3- 20 070 705
- CZ-U1- 27 529
- JP-A- H02 110 340
- DONZELLA G ET AL: "Influence of inclusion content on rolling contact fatigue in a gear steel: Experimental analysis and predictive modelling", ENGINEERING FRACTURE MECHANICS, ELSEVIER, AMSTERDAM, NL, vol. 78, no. 16, 29 July 2011 (2011-07-29) , pages 2761-2774, XP028294065, ISSN: 0013-7944, DOI: 10.1016/J.ENGFRACMECH.2011.07.011 [retrieved on 2011-08-05]

## Description

### Field of the invention

The invention comes under the area of the development of test devices for material contact fatigue tests and concerns the construction of jigs for mounting the tested material samples.

### Background of the invention

Currently a range of special test devices exist for simulating the contact fatigue process in the loading of train wheel-rails, which vary in the measuring of the test sample due to the actual dimensions of the contact pair and the possibilities of achieving real loading parameters in operation. A principle of the rolling contact fatigue (RFC) which allows to identify material behavior during operation in contact position is described e.g. "Influence of inclusion content on rolling contact fatigue in a gear steel", written by G. Donzella, M. Faccoli, A. Mazzu, C. Petrogalli, H. Desimone, published by ELSEVIER 2011.

Along with the requirement to approach actual operating conditions when testing materials, a need also arises to test different materials under totally identical loading conditions. This requirement is not completely upheld anywhere with the current state of testing device technology.

From a study of patent literature it is found that all of the current testing device structures in this field work on the assumption that a material sample in the form of a disc is tested during individual rolling for given fixed conditions. After the completion of the test this material sample is removed from the device and replaced with another sample, which is then tested under the same conditions, if possible, for comparison purposes. This is how all known devices are conceived in principle as, for example, in the solutions given in the US4570348A, JPH10151903A, CN102384879A, KR20120000608A, PL219362B1, CZ20040112A files. The basic disadvantage of the listed solutions and their application is that they do not allow for the comparison of different materials under absolute conditions because in every case of sample change, that is to a disc of a given material, inaccuracies occur when setting the test parameters, particularly geometric uncertainties when setting the contact positions, uncertainties in setting the loading forces in contact, uncertainty in setting the slide of the rolling parts, thus the driving wheel and the test disc. This all results in imprecise comparison of the results of individual material samples, and thus the determination of the most advantageous variants of the tested materials is also problematic.

When carrying out tests on material contact fatigue resistance a requirement is also made that material from the surface layers of the pair is also tested. The surface layers have differing mechanical characteristics after specific heat processing, which totally limits their contact fatigue resistance. The current test devices in accordance with existing patents do not allow the performance of material testing to a quality which realistically corresponds to the state of the materials in contact between the rolling elements, for instance the wheel-rail set.

The role of the presented invention is to introduce a new jig structure to fix samples in a testing device used for material contact fatigue tests, which allows the performance of exact comparison tests on several types of material, or the surface treatments of these materials, is structurally simple, and the dimensions of the used samples allow for material samples to be taken from the completed products, for instance train wheels, in layers which are decisive from the point of view of the lifespan and safety of train wheels and rails.

### Summary of the invention

The defined objective is achieved by the invention which is a jig for mounting test samples according to claim 1.

In a preferred embodiment, the bearing ring for ensuring mutual concentrated placement with the pressure ring provided with a central recess, the loading ring and the pressure ring are axially clamped by a screw connection using clamping bolts placed in connecting holes which are created in the loading ring and pressure ring between mutually opposite beds, wherein on the bottom of the beds of the bearing ring clear radial assembly holes are formed.

In the optimum case the bearing ring and the pressure ring are supplied with a set of eight half ring beds.

The new invention achieves a greater effect in that the structural solution of the jig allows loading the material samples with a defined contact pressure on the surface. After placing the jig in the testing device it allows the testing of the material contact fatigue resistance when simulating operating conditions, where it is also possible to carry out continual evaluation of the material state at chosen stages of loading. The greatest advantage, however, is that the structure of the jig ensures the conduction of accurate comparative tests on several alternate materials under absolutely identical conditions.

### Brief description of the drawings

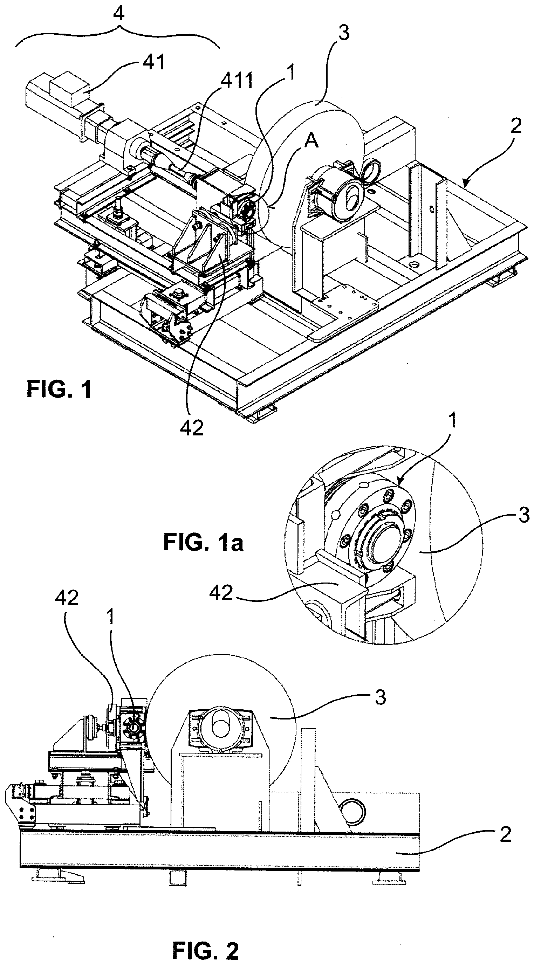

Concrete examples of the form of the invention are indicated schematically on the attached drawings, where
Figure 1 is an axonometric view of the testing device with the jig installed,
Figure 1a) is a detailed view of area A of the jig contact with the inserted test material samples and the drum of the testing device from Figure 1,
Figure 2 is a side view of the test device from Figure 1
Figure 3 is an axonometric view of the jig with an example of its placement on the bearing shaft equipped with bearings.
Figure 4 is an elevation view of the jig placed on the bearing shaft in Figure 3,
Figure 5 is an axial longitudinal section of the jig set from Figure 4
Figure 6 is an axonometric view of the basic version of the jig with eight beds for the placement of test samples,
Figure 6a) is a view of the jig disc from Figure 6 after its disassembly,
Figure 7 is a view of the alternative version of the disc with two beds for the placement of testing samples,
Figure 8 is a view of an alternative version of the disc with six beds for the placement of test samples,
Figure 9 is an axonometric view of the adjustable clamping sleeve of the jig for its placement on the load bearing shaft, and
9. Figure 9a) is a longitudinal section of the adjustable clamping sleeve from Figure

The drawings which illustrate the presented invention and concrete uses described in the following examples in no way limit the extent of the protection specified in the definition, but only illustrate the nature of the invention.

### Detailed description of the invention

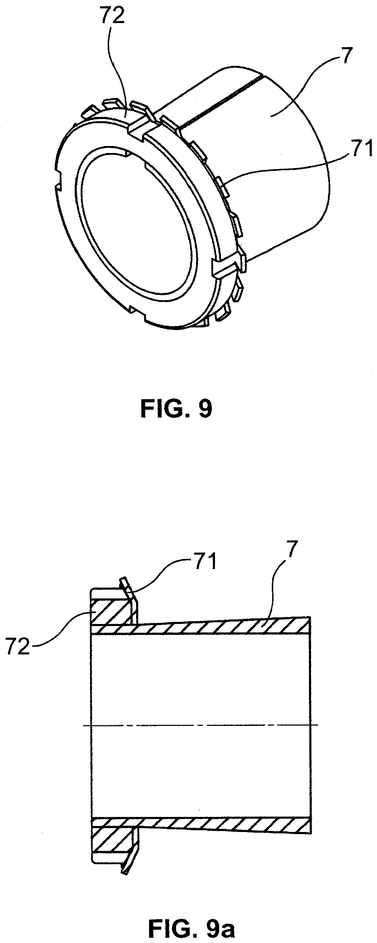

The jig 1 is intended for installation on the test device for implementation of material contact fatigue tests, which is formed by a bearing base 2 created with the advantage of the form of welded profiled materials onto which the rolling drum 3 and test set 4 are mounted, which contains both a drive unit 41 for rotating the jig 1, whose entry shaft 411 is mounted coaxially with the rotating axis of the rolling drum 3, and also the pressing unit 42 for pressing the jig 1 against the rolling drum 3, which is mounted displaceably in a direction perpendicular to the rotating axis of the rolling drum 3. The testing device comprises a bearing shaft 5 and the jig 1 can be mounted on that bearing shaft 5 to the entry shaft 411 of the drive unit 41 for rotating the jig fitted with two bearings 6, whose position on bearing shaft 5 is limited by the adjustable clamping sleeve 7 equipped with support washers 71 and fixing nuts 72. The design of the adjustable clamping sleeve 7 is clear from Figure 9 and Figure 9a). On the end element of the bearing shaft 5 adjacent to the coupling with the entry shaft 411 of the driving unit 41 the test sample 8 is inserted in the demountable jig 1, whose position in light of the adjacent bearing 6 is limited by a spacer insert 10, whose fixation on the bearing shaft 5 is achieved using an end clamping sleeve 9 equipped with a safety washer 91 and tightening nut 92.

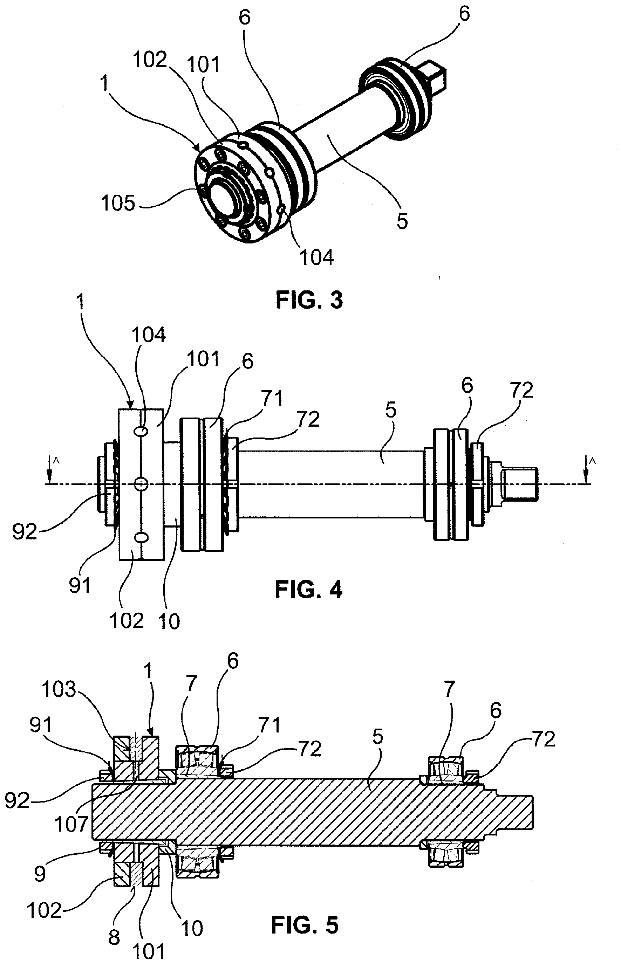

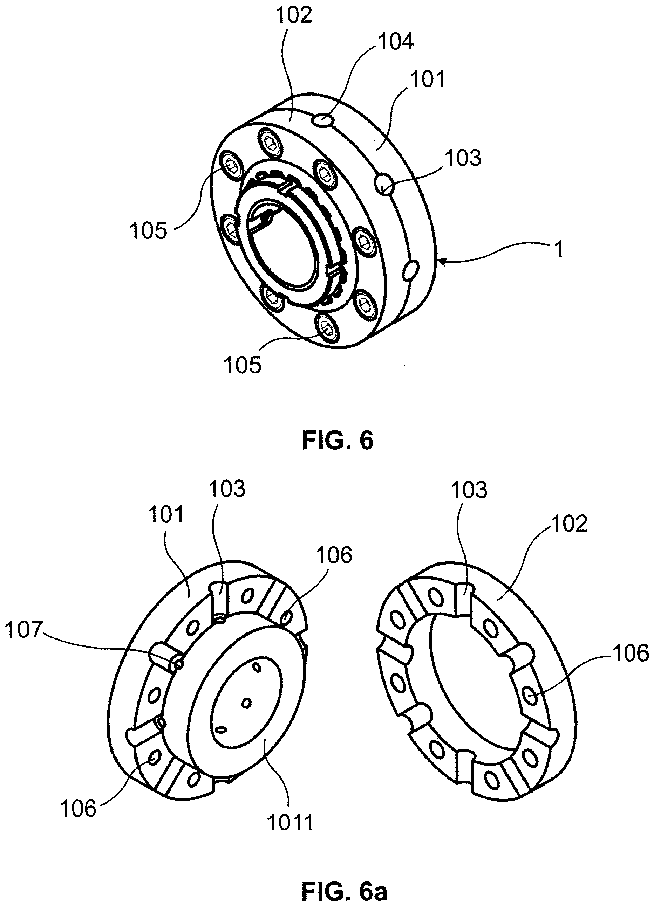

The actual jig 1 consists of a basic structure illustrated in Figure 6 and Figure 6a) made from a bearing ring 101 and a pressure ring 102, which consist of flat circular discs of the same diameter where the bearing ring 101 is given a central insert to ensure mutual concentric placement 1011. Both rings 101 and 102 are equipped with a set of eight half ring beds 103 for inserting test samples 8. The beds 103 are evenly positioned along the circumference of both rings 101 and 102 mirrored opposite each other and are directed radially from the outer perimeter towards the centre of the jig 1. With this bed structure 103 the completion of the jig 1 creates an outwardly open cylindrical cavity 104 for the insertion of test samples 8, as is evident in Figure 4,5,6. The bearing ring 101 and the pressure ring 102 are clamped with a bolted connection by means of tightening bolts 105 with a recessed head inserted in connecting holes 106, which are created in both rings 101, 102 between the mutually adjacent beds 103.

And finally clear radial holes 107 for assembly are formed in the bottom of the beds 103 of the bearing ring 101, which allow easier removal or pressing out of the test samples 8 from the beds 103 after completion of the tests.

When carrying out tests with test samples 8 from various materials, they are placed in the cavities 104 of the beds 103 created by both rings 101, 102 which are then clamped with the help of tightening bolts 105. The jig 1 along with the inserted samples 8 are subsequently placed in the test device, which, with its rolling drum 3, creates a contacting rolling pair with the perimeter element of the jig 1. After setting the required load parameters to simulate a real load, e.g. the contact between a wheel and a rail, with the help of a pressure unit 42, the power unit 41 is turned on and the testing of various materials is carried out under perfectly identical operating conditions. After completing the test the jig 1 is taken out of the device, the test samples 8 are pressed out of the cavities 104, are replaced by others, and the process can be repeated with any changes to the loading parameters.

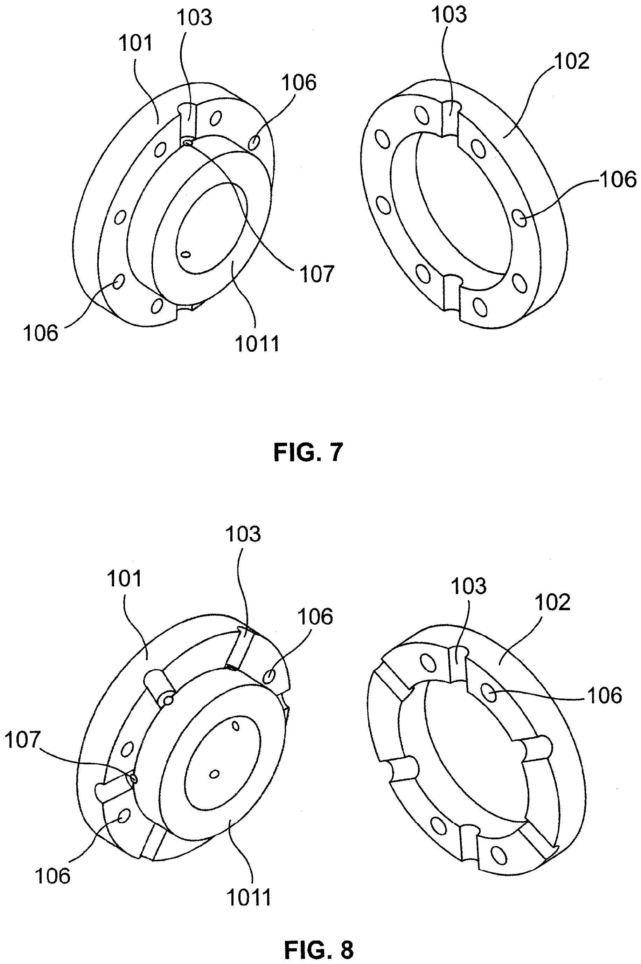

The design of the described jig 1 is not the only possible structural solution of the invention, but as is evident in Figure 7 and Figure 8, it is possible to create a differing number of beds 103 on the perimeters of the rings 101, 102, for instance two, three, four, six or ten. Without affecting the essence of the invention, the jig 1 can be mounted on the bearing shaft 5 not by means of the set comprising a fastening end sleeve 9 equipped with a safety washer 91 and a tightening nut 92 as illustrated in Figure 9 and Figure 9a), but, for example, with the aid of a grooved shaft or tongue and groove connection. The mutual centring of both rings can be achieved not only with the help of a centred fitting 1011 of the bearing ring 101, but also, for example, additionally by a set of axially guided pins.

### Industrial applications

The jig 1 for testing material contact fatigue resistance is useful for comparative testing on multiple test samples 8 of the materials used when manufacturing, for example, train wheels and rails. All test samples 8 are tested under absolutely identical conditions so that the results of the contact fatigue tests clearly ranks the resistance of the individual material test samples 8. This is, from the perspective of industrial use, very important information for the manufacturer of, for example, train wheels or rails which have an impact in deciding on which material to use for manufacture, or what operational deployment is used.

## Claims

1. A jig (1) for mounting test samples (8) in a testing device for material contact fatigue tests, the testing device equipped with at least a rolling drum (3), a bearing shaft for mounting the jig and a testing set (4), which includes a drive unit (41) for rotating the jig and comprising an entry shaft (411) for coupling to the bearing shaft (5), and a pressure unit (42) for pressing the jig against the rolling drum, the pressure unit being mounted displaceably in the direction perpendicular to the rotating axis of the rolling drum (3), the jig being mountable to the bearing shaft and comprising a bearing ring (101) and a pressure ring (102), which consist of flat circular discs of the same diameter and are adapted to ensure mutual concentric fitting and clamping in the direction of the bearing shaft (5), the jig **being characterised in that** the bearing ring (101) and pressure ring (102) are equipped with a set of at least two circumferentially and regularly spaced and mirrored half ring beds (103), which create, when completed, the entire jig (1) with outwardly open cylindrical cavities (104) for inserting the test samples (8).

2. The jig (1) for mounting test samples (8) according to claim 1 **characterised by the fact** that the bearing ring (101) is equipped with a centred fitting (1011) to ensure mutual concentric placement with the pressure ring (102).

3. The jig (1) for mounting test samples (8) according to claim 1 or 2 **characterised by the fact** that the bearing ring (101) and pressure ring (102) are axially clamped by a bolted connection using a tightening bolt (105) mounted in the connecting holes (106) which are created in the bearing ring (101) and pressure ring (102) between the mutually adjacent beds (103).

4. The jig (1) for mounting test samples (8) in accordance with any of claims 1 to 3 **characterised by the fact** that in the bottom of the beds (103) of the bearing ring (101) clear radial assembly holes (107) are formed.

5. The jig (1) for mounting test samples (8) in accordance with any of the claims 1 to 4 **characterised by the fact** that the bearing ring (101) and the pressure ring (102) are equipped with a set of eight half ring beds (103).

## Patentansprüche

1. Eine Vorrichtung (1) zur Montage von Prüfmustern (8) in einem Prüfgerät für Materialkontakt-Ermüdungsprüfungen, wobei das Prüfgerät mit mindestens einer Walztrommel (3), einer Lagerwelle zur Aufnahme der Vorrichtung und einem Prüfsatz (4) ausgestattet ist, die über eine Antriebseinheit (41) zum Rotieren der Vorrichtung verfügt, deren Eingangswelle (411) zur Kopplung mit der Lagerwelle (5) dient, und eine Andruckeinheit (42) zum Andrücken der Vorrichtung gegen die Walztrommel, wobei die Andruckeinheit in Richtung senkrecht zur Drehachse der Walztrommel (3) verschiebbar gelagert ist, wobei die Vorrichtung an der Lagerwelle montierbar ist und einen Lagerring (101) und einen Druckring (102) aufweist, die aus flachen Kreisscheiben gleichen Durchmessers bestehen und geeignet sind, eine gegenseitige konzentrische Passung und Klemmung in Richtung der Lagerwelle (5) zu gewährleisten, wobei die Vorrichtung **dadurch gekennzeichnet ist, dass** der Lagerring (101) und der Druckring (102) mit einem Satz von mindestens zwei umfangsmäßig und regelmäßig beabstandeten und gespiegelten Halbringbetten (103) ausgestattet sind, die, wenn sie fertiggestellt sind, die gesamte Vorrichtung (1) mit nach außen offenen zylindrischen Hohlräumen (104) zum Einsetzen der Prüfmuster (8) bilden.

2. Die Vorrichtung (1) zur Montage von Prüfmustern (8) nach Anspruch 1, **dadurch gekennzeichnet, dass** der Lagerring (101) mit einem zentrierten Beschlag (1011) ausgestattet ist, um eine gegenseitige konzentrische Platzierung mit dem Druckring (102) sicherzustellen.

3. Die Vorrichtung (1) zur Montage von Prüfmustern (8) nach Anspruch 1 oder 2, **dadurch gekennzeichnet, dass** der Lagerring (101) und Druckring (102) durch eine Schraubverbindung mittels eines Anzugsbolzens (105), der in den Verbindungslöchern (106), die im Lagerring (101) und Druckring (102) zwischen den aneinander angrenzenden Betten (103) ausgebildet sind, axial geklemmt sind.

4. Die Vorrichtung (1) zur Montage von Prüfmustern (8) nach einem der Ansprüche 1 bis 3, **dadurch gekennzeichnet, dass** am Boden der Betten (103) des Lagerrings (101) freie radiale Montagebohrungen (107) ausgebildet sind.

5. Die Vorrichtung (1) zur Montage von Prüfmustern (8) nach einem der Ansprüche 1 bis 4, **dadurch gekennzeichnet, dass** der Lagerring (101) und der Druckring (102) mit einem Satz von acht Halbringbetten (103) ausgestattet sind.

## Revendications

1. Gabarit (1) pour monter des échantillons d'essai (8) dans un dispositif d'essai pour des essais de fatigue par contact de matériaux, le dispositif d'essai étant équipé d'au moins un tambour rotatif (3), d'un arbre de palier pour monter le gabarit et d'un ensemble d'essai (4), qui comprend une unité d'entraînement (41) pour faire tourner le gabarit, dont l'arbre d'entrée (411) est destiné à être couplé à l'arbre de palier (5), et une unité de pression (42) pour presser le gabarit contre le tambour de roulement, l'unité de pression étant montée de façon déplaçable dans la direction perpendiculaire à l'axe de rotation du tambour rotatif (3), le gabarit pouvant être monté sur l'arbre de palier et comprenant une bague de roulement (101) et une bague de pression (102), qui consistent en des disques circulaires plats de même diamètre et sont adaptés pour assurer un ajustement et un serrage mutuellement concentriques dans la direction de l'arbre de palier (5), le gabarit **étant caractérisé en ce que** la bague de roulement (101) et la bague de pression (102) sont équipées d'un ensemble d'au moins deux lits de demi-anneaux (103) espacés et réfléchis de manière circonférentielle et régulière, qui créent, lorsqu'ils sont terminés, le gabarit entier (1) avec des cavités cylindriques ouvertes vers l'extérieur (104) pour insérer les échantillons d'essai (8).

2. Gabarit (1) pour le montage d'échantillons d'essai (8) selon la revendication 1, **caractérisé par le fait que** la bague de roulement (101) est équipée d'un raccord centré (1011) pour assurer un placement mutuellement concentrique avec la bague de pression (102).

3. Gabarit (1) pour le montage d'échantillons d'essai (8) selon la revendication 1 ou 2, **caractérisé par le fait que** la bague de roulement (101) et la bague de pression (102) sont serrées axialement par une connexion boulonnée utilisant un boulon de serrage (105) monté dans les trous de connexion (106) qui sont créés dans la bague de roulement (101) et la bague de pression (102) entre les lits mutuellement adjacents (103).

4. Gabarit (1) de montage d'échantillons d'essai (8) selon l'une quelconque des revendications 1 à 3 **caractérisé par le fait que** dans le fond des lits (103) de la bague de roulement (101) sont formés des trous de montage radiaux dégagés (107).

5. Gabarit (1) pour le montage d'échantillons d'essai (8) selon l'une quelconque des revendications 1 à 4, **caractérisé par le fait que** la bague de roulement (101) et la bague de pression (102) sont équipées d'un jeu de huit demi-anneaux (103).
